# EUROPÄISCHE PATENTANMELDUNG

(11) **EP 3 093 458 A1**
(43) Veröffentlichungstag der Anmeldung: **16.11.2016**
(21) Anmeldenummer: 16168999.7
(22) Anmeldetag: 10.05.2016
(51) Int. Cl.: F01K 23/06, F28D 15/04, F02G 5/02, F01N 5/02

(54) **KRAFTFAHRZEUG-WÄRMEÜBERTRAGERSYSTEM**

(30) Priorität: 12.05.2015 DE 102015107473
(71) Anmelder: Benteler Automobiltechnik GmbH, 33102 Paderborn (DE)
(72) Erfinder: Przybylski, Sven, 33104 Paderborn (DE); Düpmeier, Dr. Tobias, 33100 Paderborn (DE); Rubitschek, Felix, 33104 Paderborn (DE)
(74) Vertreter: Griepenstroh, Jörg

(57) **Zusammenfassung**

Die Erfindung betrifft ein Kraftfahrzeug-Wärmeübertragersystem (B) mit einem geschlossenen Kreislauf für ein Arbeitsmedium (AM), wobei ein Verdampfer (1) zur Verdampfung des Arbeitsmediums (AM) und ferner ein von einem Kühlfluid (KF) anströmbarer Kondensator (2) zur Kondensierung des dampfförmigen Arbeitsmediums (AM) vorgesehen ist. Zwischen Kondensator (2) und Verdampfer (1) ist ein Ausgleichsbehälter (3) für das Arbeitsmedium (AM) eingegliedert. Dieser Ausgleichsbehälter (3) ist im Kühlfluidstrom (KS) angeordnet und durch den Kühlfluidstrom (KS) kühlbar. Besonders vorteilhaft ist der Ausgleichsbehälter (3) in den Kondensator (2) integriert und bildet mit dem Kondensator (2) eine bauliche Einheit.

## Beschreibung

Die Erfindung betrifft ein Kraftfahrzeug-Wärmeübertragersystem gemäß den Merkmalen im Oberbegriff von Anspruch 1.

Die Nutzung der thermischen Verlustenergie im Abgas der Verbrennungsmotoren von Kraftfahrzeugen bietet verschiedene Ansätze, um die Effizienz von Kraftfahrzeugen zu erhöhen. In diesem Zusammenhang bietet die Verwendung der Abgaswärme zur Beheizung des Fahrgastraums die Möglichkeit, auf zusätzliche Heizmaßnahmen zu verzichten und so den Kraftstoffverbrauch zu reduzieren. Auch kann die Abgaswärme zur Warmlaufbeschleunigung der Antriebsstrangkomponenten eines Kraftfahrzeuges verwendet werden. Hierdurch können mechanische Verlustleistung und damit Motorlast und -verbrauch während der Warmlaufphase verringert werden.

Die Rückgewinnung der beim motorischen Verbrennungsprozess entstehenden Abwärme bietet folglich ein großes Einsparpotential für Kraftstoff und kann zur Erhöhung des Fahr- bzw. Nutzkomforts eines Kraftfahrzeuges beitragen.

Durch die EP 0 832 411 B1 bzw. die DE 696 06 296 T2 ist ein Verfahren zum Transport von Flüssigkeiten in einem mikrofluidischen Kreislaufsystem bekannt mit einer Kapillarpumpe zum Transport von Wärme. Im Kreislauf sind mindestens ein Verdampfer sowie ein Kondensator und ein Behälter zur Aufnahme eines wärmeübertragenden Fluids bzw. Arbeitsmediums vorgesehen. Der Verdampfer weist einen Ausgang auf, der über eine Verdampferleitung mit dem Eingang des Kondensators verbunden ist. Ein Ausgang des Kondensators ist mit dem Ausgleichsbehälter verbunden. Der Verdampfer enthält einen Verdampferkörper mit einem durchlässigen Material, um das Arbeitsmedium durch Wärmeabsorption zu verdampfen und einen kapillaren Pumpdruck im Inneren des Kreislaufs zu erzeugen. Der Ausgleichsbehälter und der Verdampfer sind thermisch voneinander isoliert und miteinander über eine Leitung verbunden. Hierbei ist der Behälter so beschaffen, dass er auf einer niedrigeren Temperatur als der Verdampfer gehalten wird. Dies soll einen Wärmetausch mit einer minimalen Temperaturdifferenz zwischen der Wärmequelle und dem Kondensator erlauben.

Zum Stand der Technik zählt durch die WO 2013/037784 A1 eine kapillar-gepumpte Wärmetransportvorrichtung unter Verwendung eines Zweiphasen-Arbeitsmediums. Dieses Wärmeübertragersystem umfasst einen Verdampfer mit einem mikroporösen Körper, einen Kondensator sowie einen Ausgleichsbehälter mit einem Einlass und einem Auslass. Der Ausgleichsbehälter weist mehrere voneinander getrennte separate, jedoch in Fluidverbindung stehende Bereiche auf. Hierdurch sollen nachteilige Einflüsse vermieden werden, die bei der Vermischung des Arbeitsmediums entstehen und zu einem Druckabfall führen können.

Eine gleichartige Wärmetransportvorrichtung offenbart die WO 2013/037785 A1, wobei zwischen dem Ausgleichsbehälter und dem mikroporösen Körper des Verdampfers ein Rückschlagventil vorgesehen ist, um ein Rückströmen des Arbeitsmediums vom Verdampfer in den Ausgleichsbehälter zu verhindern. Hierdurch soll ein Austrocknen des Verdampfers vermieden werden.

Der Erfindung liegt ausgehend vom Stand der Technik die Aufgabe zugrunde, ein Kraftfahrzeug-Wärmeübertragersystem bauraum- und anwendungstechnisch zu verbessern sowie in seiner Effizienz zu erhöhen.

Die Lösung dieser Aufgabe besteht nach der Erfindung in einem Kraftfahrzeug-Wärmeübertragersystem gemäß Anspruch 1.

Vorteilhafte Ausgestaltungen und Weiterbildungen des erfindungsgemäßen Kraftfahrzeug-Wärmeübertragersystems sind Gegenstand der abhängigen Ansprüche 2 bis 11.

Im Kondensator des erfindungsgemäßen Kraftfahrzeug-Wärmeübertragersystems wird das vom Verdampfer kommende dampfförmige Arbeitsmedium kondensiert. Hierzu ist der Kondensator in einen Kühlfluidstrom eingegliedert und wird mit Kühlfluid beaufschlagt, wobei der Kondensator von einem Kühlfluid angeströmt bzw. umströmt oder durchströmt wird.

Erfindungsgemäß ist der Ausgleichsbehälter im Kühlfluidstrom angeordnet und ist durch den Kühlfluidstrom kühlbar. Das Kühlfluid kann ein Gas, insbesondere Luft, oder auch eine Flüssigkeit, beispielsweise Öl, sein.

Das erfindungsgemäße Kraftfahrzeug-Wärmeübertragersystem ist bauraum- und anwendungstechnisch vorteilhaft. Die Integration des Ausgleichsbehälters in den Einflussbereich des Kühlfluidstroms ermöglicht es, ein niedriges Druckniveau im Kreislauf zu halten. Dies führt zu einer Steigerung der Effizienz und ist anwendungstechnisch vorteilhaft. Durch die Integration des Ausgleichsbehälters in den Einflussbereich des Kühlfluidstroms kann auch der zur Verfügung stehende Bauraum im Kraftfahrzeug effektiv genutzt werden. Auf eine separate Pumpe für das Arbeitsmedium kann verzichtet werden. Gleiches gilt für aufwendige Ventilanordnungen und Rückschlagventile.

Das erfindungsgemäße Kraftfahrzeug-Wärmeübertragersystem zeichnet sich insbesondere durch eine hohe Wärmeübertragungsdichte aus und ist hierdurch in seiner Effizienz deutlich verbessert.

Gemäß der Erfindung ist der Ausgleichsbehälter durch den Kühlfluidstrom kühlbar. Hierdurch ergibt sich ein zusätzliches Wärmeangebot. Dieses zusätzliche Wärmeangebot ist nutzbar für Erwärmungszwecke im Kraftfahrzeug, beispielsweise für die Innenraumheizung oder zur Erwärmung von Antriebskomponenten, wie dem Schaltgetriebe oder des Motoröls.

Ein weiterer wesentlicher Vorteil des erfindungsgemäßen Kraftfahrzeug-Wärmeübertragersystems liegt in der hohen Spontanität, sprich dem Ansprechverhalten und vor allem darin, dass der Transport des Arbeitsmediums im Kreislauf durch den Wärmeeintrag selbst sichergestellt ist. Das bedeutet, es bedarf keiner weiteren Nebenverbraucher, wie einer Pumpe. Hierdurch kann der Wirkungsgrad des erfindungsgemäßen Kraftfahrzeug-Wärmeübertragersystems effizienter und in Bezug auf die Systemkosten günstiger gestaltet werden.

Der Ausgleichsbehälter im erfindungsgemäßen Kraftfahrzeug-Wärmeübertragersystem hat im Wesentlichen zwei Funktionen, nämlich die Schaffung eines Vorrats an Arbeitsmedium und zum anderen die Aufnahme des durch den Dampf verdrängten Anteil des Arbeitsmediums sowie den Druck im System auf ein niedrigst mögliches Niveau zu halten.

Ein wesentlicher Aspekt der Erfindung besteht darin, dass die Kühlung des Ausgleichsbehälters und des Kondensators kombiniert wird. Hierdurch wird der Kühlluftstrom für die Kühlung des Ausgleichsbehälters und des Kondensators herangezogen und die gewonnene Wärme für Erwärmungszwecke im Kraftfahrzeug genutzt, beispielsweise mit dem Luftstrom für die Innenraumerwärmung kombiniert.

Der Ausgleichsbehälter kann im Kühlfluidstrom vor dem Kondensator angeordnet sein.

Eine weitere Ausführungsform sieht vor, dass der Ausgleichsbehälter im Kühlfluidstrom hinter dem Kondensator angeordnet ist.

Ein für die Praxis vorteilhafter Aspekt sieht vor, dass der Ausgleichsbehälter in dem Kondensator integriert ist. Insbesondere bilden der Kondensator und der Ausgleichsbehälter eine bauliche Einheit. Weiterhin vorteilhaft ist, wenn der Ausgleichsbehälter unterhalb des Kondensators angeordnet ist. Insbesondere ist der Ausgleichsbehälter unmittelbar unterhalb des Kondensators angeordnet und direkt an den Kondensatauslass des Kondensators angeschlossen.

Geometrisch ist der Ausgleichsbehälter auf den Anwendungsfall und die Anordnung im Kühlluftstrom abgestimmt. Hierbei kann ein Ausgleichsbehälter, beispielsweise ein runder oder quadratisch gestalteter Ausgleichsbehälter, unterhalb des eigentlichen Kondensators angeordnet sein. Weiterhin kann ein rohrförmiger Ausgleichsbehälter im Kühlluftstrom integriert sein. Darüber hinaus ist es möglich, den Ausgleichsbehälter in den Kühlfluidstrom zu integrieren derart, dass der Ausgleichsbehälter Bestandteil des Kühlfluidkanals ist, durch welchen das Kühlfluid geleitet wird. Hierbei kann der Ausgleichsbehälter beispielsweise in die Seitenwand des Kühlfluidkanals integriert sein nach Art einer Wassertasche.

Die Effizienz des erfindungsgemäßen Kraftfahrzeug-Wärmeübertragersystems kann weiterhin dadurch gesteigert werden, dass ein Druckausgleich zwischen Verdampfer und Ausgleichsbehälter erfolgt. Hierzu sind Mittel für einen Druckausgleich zwischen Verdampfer und Ausgleichsbehälter vorgesehen. Insbesondere sind der Verdampfer und der Ausgleichsbehälter über eine Druckausgleichsleitung miteinander verbunden. Auf diese Weise wird ein niedriges Druckniveau im Kreislauf sichergestellt. Durch den Druckausgleich zwischen Verdampfer und Ausgleichsbehälter kann die Arbeitsrichtung des Kreislaufs insbesondere im Startverhalten beeinflusst werden. Weiterhin ist hierdurch eine Stabilisierung der Temperatur in der Startphase möglich, was vorteilhaft auf die Effizienz bzw. den Wirkungsgrad des Systems ist. Insbesondere wird eine systemvorteilhafte hohe Temperaturdifferenz zwischen Dampfleitung und Kondensatorleitung erreicht.

Der Verdampfer steht mit einer Wärmequelle des Kraftfahrzeuges wärmeübertragend in Kontakt. Besonders vorteilhaft ist der Verdampfer in den Abgasstrom der Brennkraftmaschine des Kraftfahrzeugs integriert. Hierdurch kann die Abwärme des heißen Abgases genutzt werden.

Ein besonders vorteilhaftes Kraftfahrzeug-Wärmeübertragersystem sieht vor, dass der Verdampfer mehrere Verdampfermodule umfasst. Die Verdampfermodule sind vorzugsweise so zusammen geschaltet, dass sich zwischen ihnen ein Durchgang für den heißen Abgasstrom ergibt, der von der Brennkraftmaschine des Kraftfahrzeugs kommt.

In diesem Zusammenhang ist weiterhin vorteilhaft, dass der Verdampfer oder ein bzw. jedes Verdampfermodul ein Gehäuse und eine im Gehäuse angeordnete Kapillarstruktur aufweisen. Das Gehäuse besteht vorzugsweise aus einem gut wärmeleitenden Material, insbesondere einem Metall, vorzugsweise Stahl, insbesondere einem Edelstahl. Möglich sind auch Gehäuse aus Kupfer oder Aluminium. Weiterhin kann das Gehäuse aus keramischen Werkstoffen bestehen. Die Kapillarstruktur im Inneren des Gehäuses ist insbesondere durch einen porösen Plattenkörper aus einem gesinterten Material gebildet. Insbesondere ist die Kapillarstruktur auf metallischer Basis ausgeführt.

Ein Kraftfahrzeug-Wärmeübertragersystem mit einem Verdampfer bzw. Verdampfermodul und integrierter Kapillarstruktur ist im Rahmen der Erfindung besonders vorteilhaft. Hierbei kommt im Ausgleichsbehälter die Funktion zu einem Vorrat an Arbeitsmedium zu schaffen, damit die Kapillarstruktur unter allen Betriebszuständen stets vollständig gesättigt ist. Weiterhin stellt der Ausgleichsbehälter sicher, dass der durch den Dampf innerhalb der Kapillarstruktur verdrängte Anteil des Arbeitsmediums aufgenommen wird und der Druck im System auf ein niedrigst mögliches Niveau gehalten wird.

Das erfindungsgemäße Kraftfahrzeug-Wärmeübertragersystem gestaltet die Rückgewinnung der beim motorischen Verbrennungsprozess entstehenden Abwärme effizienter und trägt damit zu einer Kraftstoffeinsparung bzw. einer Reduzierung des Kraftstoffmehrverbrauchs bei.

Hervorzuheben ist nochmals, dass bei dem erfindungsgemäßen Kraftfahrzeug-Wärmeübertragersystem ein zusätzliches Wärmeangebot geschaffen wird durch die Kühlung des Ausgleichsbehälters. Dieses zur Verfügung stehende zusätzliche Wärmeangebot kann für Erwärmungszwecke im Kraftfahrzeug, beispielsweise die Innenraumheizung, genutzt werden.

Für die Praxis vielversprechend ist die Integration des Ausgleichsbehälters im Kühlfluidstrom, insbesondere den Kühlfluidstrom des Klimamoduls eines Kraftfahrzeugs. Hierdurch wird eine brauchbare Wärmesenke für die Kühlung des Ausgleichsbehälters geschaffen und gleichzeitig kann die abgegebene Wärme zusätzlich für Erwärmungszwecke im Kraftfahrzeug, beispielsweise die Innenraumerwärmung, genutzt werden.

Insbesondere zeichnet sich das Kraftfahrzeug-Wärmeübertragersystem durch das stabile Startverhalten im Kreislauf aus. Ein besonderer Vorteil ergibt sich aus dem Aufrechterhalten eines geringen Druckniveaus des Dampfkreislaufs bzw. des Kreislaufes des Arbeitsmediums in der Startphase. Bei diesem System ist ein signifikant geringes Druckniveau bei effizientem Leistungsvermögen vorhanden.

Besonders effizient nutzt das Kraftfahrzeug-Wärmeübertragersystem die aus dem Abgas resultierende Abwärme. Die Abgastemperatur wird verringert durch den Wärmeentzug über dem Verdampfer.

Die kompakte Bauform des Systems bzw. von Komponenten des Systems, insbesondere die Kombination des Ausgleichsbehälters mit dem Kondensator bringt weiterhin Bauraumvorteile und ermöglicht die Einsparung von zusätzlichen Systemkomponenten wie Ventilen und gegebenenfalls auch aufwändigen Dichtungen.

Die Erfindung ist nachfolgend anhand von in den Zeichnungen dargestellten Ausführungsbeispielen näher beschrieben. Es zeigen:
- Figur 1: technisch vereinfacht eine erste Ausführungsform eines erfindungsgemäßen Kraftfahrzeug-Wärmeübertragersystems mit der schematischen Darstellung des Kreislaufes für das Arbeitsmedium,
- Figur 2: eine zweite Ausführungsform eines Kraftfahrzeug-Wärmeübertragersystems mit der schematischen Darstellung des Kreislaufes für das Arbeitsmedium und
- Figur 3: eine dritte Ausführungsform eines Kraftfahrzeug-Wärmeübertrager-systems mit der schematischen Darstellung des Kreislaufes für das Arbeitsmedium.

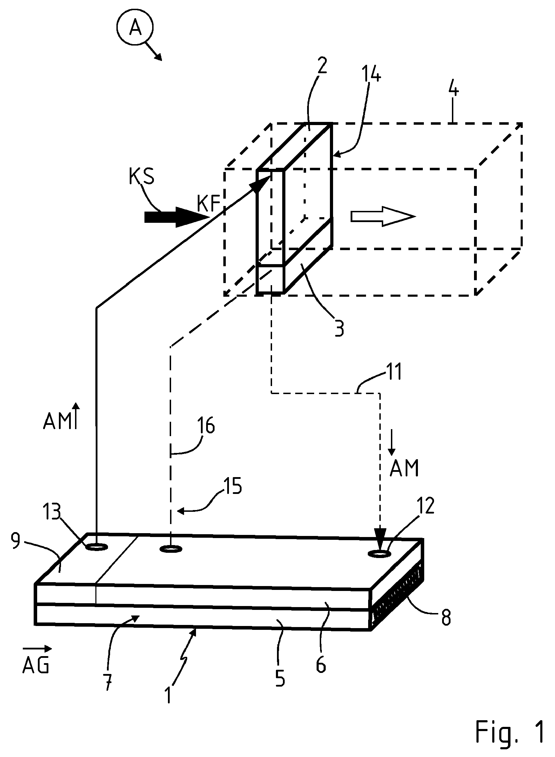

Einander entsprechende Bauteile bzw. Systemkomponenten sind in den Figuren 1 bis 3 mit den gleichen Bezugszeichen versehen.

Die Figuren 1 bis 3 zeigen jeweils schematisch technisch vereinfacht ein Kraftfahrzeug-Wärmeübertragersystem A, B, C.

Jedes Kraftfahrzeug-Wärmeübertragersystem A, B, C hat einen geschlossenen Kreislauf für ein Arbeitsmedium AM und umfasst einen Verdampfer 1 zur Verdampfung des Arbeitsmediums AM sowie einen Kondensator 2 zur Kondensierung des dampfförmigen Arbeitsmediums AM. Zwischen Kondensator 2 und Verdampfer 1 ist ein Ausgleichsbehälter 3 vorgesehen. Der Verdampfer 1 ist in den Abgasstrom AG einer Brennkraftmaschine eines Kraftfahrzeugs integriert. Der Kondensator 2 ist in einen Kühlfluidstrom KS eingegliedert. Bei dem Kühlfluid KF kann es sich um ein Gas, insbesondere Luft, oder auch um eine Flüssigkeit, beispielsweise ein Öl, handeln. Der Kondensator 2 wird im Kühlfluidstrom KS mit Kühlfluid KF beaufschlagt und hierbei vom Kühlfluid KF angeströmt bzw. umströmt oder durchströmt. Der Kühlfluidstrom KS wird hierbei durch einen andeutungsweise dargestellten Kanal 4 geleitet.

Der Verdampfer 1 umfasst vorzugsweise mehrere Verdampfermodule 5, 6. Die Verdampfermodule 5, 6 sind kassettenartig konfiguriert mit einem Gehäuse 7 aus einer Gehäuseschale und einem Deckel. Im Gehäuse 7 der Verdampfermodule 5, 6 ist jeweils eine Kapillarstruktur 8 angeordnet. Die Kapillarstruktur 8 ist durch einen porösen Plattenkörper aus einem gesinterten Material gebildet, insbesondere auf metallischer Basis. Der Verdampfer 1 bzw. die Verdampfermodule 5, 6 gelangen in unmittelbaren Kontakt mit dem von der Brennkraftmaschine abgeleiteten heißen Abgas AG. Bei einer vorteilhaften Ausgestaltung sind die Verdampfermodule 5, 6 so zusammen geschaltet, dass das Abgas AG durch einen zwischen den Verdampfermodulen 5, 6 ausgebildeten - hier nicht näher dargestellten - Durchgang durch den Verdampfer 1 geleitet wird.

Durch die Wärme des Abgasstroms AG wird das Arbeitsmedium AM im Verdampfer 1 verdampft. Das dampfförmige Arbeitsmedium AM wird in einer Dampfsammelkammer 9 des Verdampfers 1 aufgenommen und von dort aus über eine Dampfleitung 10 in den Kondensator 2 überführt. Im Kondensator 2 findet ein Wärmeaustausch mit dem Kühlfluid KF statt. Hierdurch wird das Arbeitsmedium AM abgekühlt und kondensiert. Vom Kondensator 2 gelangt das Arbeitsmedium AM in den Ausgleichsbehälter 3 und wird vom Ausgleichsbehälter 3 über eine Kondensatleitung 11 zum Einlass 12 des Verdampfers 1 geleitet.

Der Ausgleichsbehälter 3 ist innerhalb des Kraftfahrzeug-Wärmeübertragersystems A, B, C in den Kühlfluidstrom KS integriert und mit Kühlfluid KF beaufschlagbar. Hierdurch wird der Ausgleichsbehälter 3 durch den Kühlfluidstrom KS gekühlt. Der Systemdruck hängt wesentlich von der Temperatur des Arbeitsmediums AM im Ausgleichsbehälter 3 ab. Durch die Kühlung des Ausgleichsbehälters 3 im Kühlfluidstrom KS kann das Druckniveau im Kreislauf niedrig gehalten werden. Weiterhin ist durch die Kühlung des Arbeitsmediums AM im Ausgleichsbehälter 3 eine Stabilisierung der Temperatur im Kreislauf und damit eine Steuerung der Fließrichtung des Arbeitsmediums AM im Kreislaufs möglich. In Folge der Temperaturdifferenz zwischen der Kondensatleitung 11 bzw. am Einlass 12 des Verdampfers 1 und dem Auslass 13 des Verdampfers 1 sowie der Dampfleitung 10 fließt das Arbeitsmedium AM im Kreislauf ohne zusätzliche, extern angetriebene Umwälzvorrichtung, beispielsweise eine Pumpe. Die Fließrichtung des Arbeitsmediums AM ist durch die Pfeilspitzen an der Kondensatleitung 11 und der Dampfleitung 10 verdeutlicht.

Bei dem Kraftfahrzeug-Wärmeübertragersystem A, wie in Figur 1 dargestellt, ist der Ausgleichsbehälter 3 dem Kondensator 2 unmittelbar nachgeschaltet und insbesondere in ein gemeinsames Gehäuse 14 mit dem Kondensator 2 integriert. Der Kondensator 2 und der Ausgleichsbehälter 3 bilden eine bauliche Einheit, bei der der Ausgleichsbehälter 3 unterhalb des Kondensators 2 angeordnet ist. Zwischen Verdampfer 1 und Ausgleichsbehälter 3 ist weiterhin ein Mittel 15 für einen Druckausgleich vorgesehen. Die Mittel 15 für einen Druckausgleich umfassen eine Druckausgleichsleitung 16, die den Ausgleichsbehälter 3 und den Verdampfer 1 verbinden. Über die Druckausgleichsleitung 16 erfolgt ein Druckausgleich zwischen Verdampfer 1 und Ausgleichsbehälter 3. Hierdurch können insbesondere Dampfblasen, die sich im Bereich des Einlasses 12 auf der Flüssigkeitsseite des Verdampfers 1 bilden, entweichen.

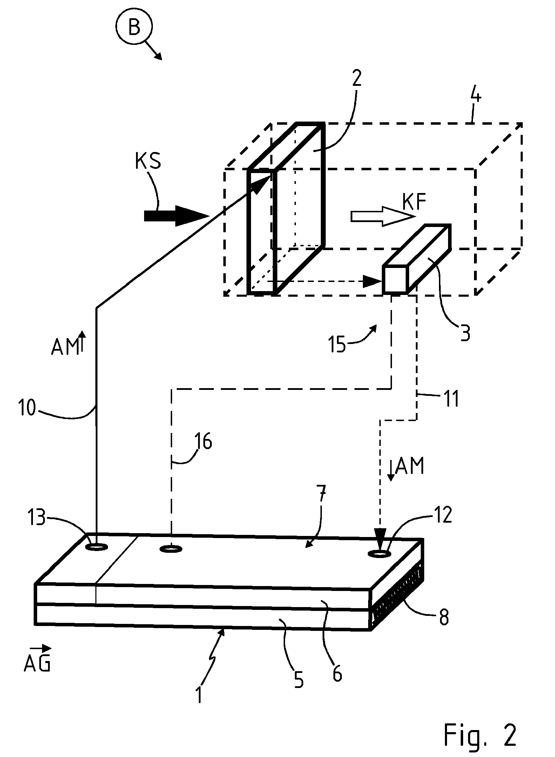

Bei dem Kraftfahrzeug-Wärmeübertragersystem B, wie in der Figur 2 dargestellt, ist der Ausgleichsbehälter 3 im Kühlfluidstrom KS hinter dem Kondensator 2 angeordnet und wird vom Kühlfluidstrom KS angeströmt bzw. umströmt. Auch hier sind der Ausgleichsbehälter 3 und der Verdampfer 1 durch ein Mittel 15 zum Druckausgleich in Form einer Druckausgleichsleitung 16 verbunden.

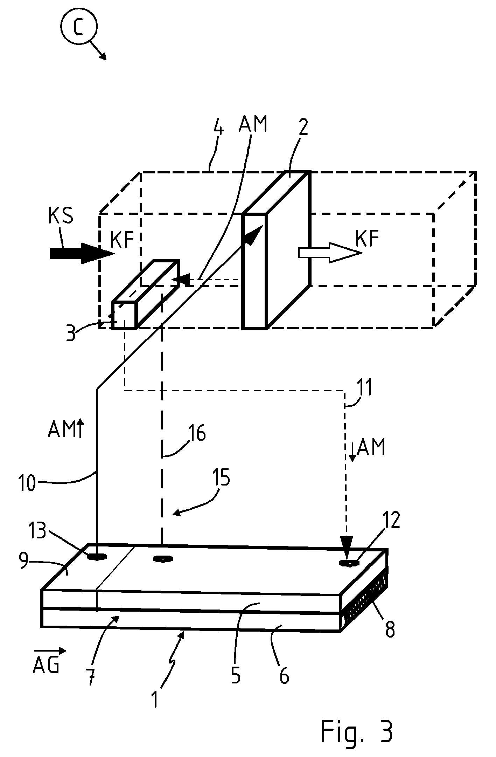

Grundsätzlich gleichartig aufgebaut ist das Kraftfahrzeug-Wärmeübertragersystem C wie in Figur 3 dargestellt. Bei dem Kraftfahrzeug-Wärmeübertragersystem C ist der Ausgleichsbehälter 3 im Kühlfluidstrom KS vor dem Kondensator 2 angeordnet und wird unmittelbar vom Kühlfluid KF angeströmt, bevor das Kühlfluid KF mit dem Kondensator 2 wärmeaustauschend in Kontakt gelangt. Ein Druckausgleich zwischen Ausgleichsbehälter 3 und Verdampfer 1 erfolgt wiederum durch Mittel 15 zum Druckausgleich in Form einer Druckausgleichsleitung 16.

### Bezugszeichen:

- 1 -: Verdampfer
- 2 -: Kondensator
- 3 -: Ausgleichsbehälter
- 4 -: Kanal
- 5 -: Verdampfermodul
- 6 -: Verdampfermodul
- 7 -: Gehäuse
- 8 -: Kapillarstruktur
- 9 -: Dampfsammelkammer von 1
- 10 -: Dampfleitung
- 11 -: Kondensatleitung
- 12 -: Einlass von 1
- 13 -: Auslass von 1
- 14 -: Gehäuse
- 15 -: Mittel
- 16 -: Druckausgleichsleitung

- A -: Kraftfahrzeug-Wärmeübertragersystem
- B -: Kraftfahrzeug-Wärmeübertragersystem
- C -: Kraftfahrzeug-Wärmeübertragersystem
- AM -: Arbeitsmedium
- AG -: Abgasstrom
- KS -: Kühlfluidstrom
- KF -: Kühlfluid

## Patentansprüche

1. Kraftfahrzeug-Wärmeübertragersystem mit einem geschlossenen Kreislauf für ein Arbeitsmedium, wobei ein Verdampfer (1) zur Verdampfung des Arbeitsmediums (AM) und ein Kondensator (2) zur Kondensierung des dampfförmigen Arbeitsmedium (AM) vorgesehen ist, welcher in einen Kühlfluidstrom (KS) eingegliedert ist und zwischen Kondensator (2) und Verdampfer (1) ein Ausgleichsbehälter (3) für das Arbeitsmedium (AM) vorgesehen ist, **dadurch gekennzeichnet, dass** der Ausgleichsbehälter (3) durch den Kühlfluidstrom (KS) kühlbar ist.

2. Kraftfahrzeug-Wärmeübertragersystem nach Anspruch 1, **dadurch gekennzeichnet, dass** der Ausgleichsbehälter (3) im Kühlfluidstrom (KS) vor dem Kondensator (2) angeordnet ist.

3. Kraftfahrzeug-Wärmeübertragersystem nach Anspruch 1, **dadurch gekennzeichnet, dass** der Ausgleichsbehälter (3) im Kühlfluidstrom (KS) hinter dem Kondensator (2) angeordnet ist.

4. Kraftfahrzeug-Wärmeübertragersystem nach einem der Ansprüche 1 bis 3, **dadurch gekennzeichnet, dass** der Ausgleichsbehälter (3) in den Kondensator (2) integriert ist.

5. Kraftfahrzeug-Wärmeübertragersystem nach Anspruch 4, **dadurch gekennzeichnet, dass** der Kondensator (2) und der Ausgleichsbehälter (3) eine bauliche Einheit bilden.

6. Kraftfahrzeug-Wärmeübertragersystem nach Anspruch 5, **dadurch gekennzeichnet, dass** der Ausgleichsbehälter (3) unterhalb des Kondensators (2) angeordnet ist.

7. Kraftfahrzeug-Wärmeübertragersystem nach einem der Ansprüche 1 bis 6, **dadurch gekennzeichnet, dass** der Verdampfer (1) mehrere Verdampfermodule (5, 6) umfasst.

8. Kraftfahrzeug-Wärmeübertragersystem nach einem der Ansprüche 1 bis 7, **dadurch gekennzeichnet, dass** Mittel (15) für einen Druckausgleich zwischen Verdampfer (1) und Ausgleichsbehälter (3) vorgesehen sind.

9. Kraftfahrzeug-Wärmeübertragersystem nach einem der Ansprüche 1 bis 8, **dadurch gekennzeichnet, dass** der Verdampfer (1) oder ein Verdampfermodul (5, 6) ein Gehäuse (7) und eine im Gehäuse (7) angeordnete Kapillarstruktur (8) aufweist.

10. Kraftfahrzeug-Wärmeübertragersystem nach Anspruch 9, **dadurch gekennzeichnet, dass** die Kapillarstruktur (8) durch einen porösen Plattenkörper aus einem gesinterten Material gebildet ist.

11. Kraftfahrzeug-Wärmeübertragersystem nach einem der Ansprüche 1 bis 10, **dadurch gekennzeichnet, dass** der Verdampfer (1) in den Abgasstrom (AG) der Brennkraftmaschine des Kraftfahrzeugs integriert ist.
